# EUROPEAN PATENT SPECIFICATION

(11) **EP 4 231 818 B1**
(45) Date of publication and mention of the grant of the patent: **25.02.2026**
(21) Application number: 21794225.9
(22) Date of filing: 28.09.2021
(51) Int. Cl.: A01K 5/01, A01K 9/00

(54) **A SUSPENSION SYSTEM FOR A FEEDING SYSTEM FOR CATTLE**
AUFHÄNGSYSTEM FÜR EIN FUTTERSYSTEM FÜR NUTZTIERE
SYSTÈME DE SUSPENSION POUR UN SYSTÈME DE NOURRISSAGE DE BÉTAIL

(30) Priority: 26.10.2020 NL 2026765
(43) Date of publication of application: 30.08.2023
(73) Proprietor: Wennemars B.V., 7722 TA Dalfsen (NL)
(72) Inventor: WENNEMARS, Dirk Jan, 7722 TA Dalfsen (NL); WENNEMARS-GERRITSEN, Reinetta Marie Geertruida, 7722 TA Dalfsen (NL)
(74) Representative: Dogio Patents B.V.
(86) International application number: PCT/NL2021/050584
(87) International publication number: WO 2022/093010

(56) References cited:
- NL-B1- 2 013 494
- NL-B1- 2 013 494
- US-A- 4 452 415
- US-A1- 2019 059 320

## Description

The invention relates to a suspension system for a feeding system for cattle.

US 2019/059320 discloses a device for securing a feed or water bucket which includes a hook for receiving a bail of a bucket and a support for engaging the lip of the bucket. The device locks the bucket in position so that a horse or other animal is prevented from accidentally knocking the bucket off.

US 4,452,415 discloses a bucket holder that secures a bucket having a lip and a bail on a wall. The bucket holder has a turned lower end to engage the lip of the bucket and also has a clasp provided with upturned and downturned clasp portions to imprison the bail of the bucket. A slide lock slidable on the bucket holder may be secured by a stud and wing nut to lock the lip into latching engagement with the turned lower end of the bucket holder.

NL 2013494 discloses a suspension system for a feeding system for cattle, said feeding system comprising a holder for liquid feed, which holder is provided with a teat having a suction end to enable the cattle to suck liquid feed from the holder, said suspension system comprising an attachment portion which is equipped to connect the suspension system to a fence, and wherein the suspension system comprises at least one plate which is provided with obliquely upwards and forwards extending first protrusions which are arranged to protrude through apertures in a wall of the holder so that the first protrusions extend to within the holder, and which suspension system further comprises a locking portion to secure the holder against lifting from said first protrusions.

The suspension system of NL 2013494 comprises a bracket with a fastening part which can be attached to a support, such as a grid, and with at least one extending support part for supporting the feed holder; a securing element which is connected to the bracket and which is provided to prevent the feed holder from being detached from the support part in a secured state and to allow the feed holder to be removed from the feed holder attachment, wherein the securing element comprises at least one first leg with a securing leg extending therefrom, the first leg being in such an angle with respect to the support part that they define a receiving space between them which is closed in the secured state by the securing leg, the receiving space being able to then contain at least one part of the feed holder, and that of the first leg and the support part at least one is elastic, so that the securing leg and the support part are movable with respect to one another in order to bring the feed holder attachment into a release state in which the receiving space enables to thus take in or out the said part of the feed holder.

According to the invention an improved and more versatile suspension system is proposed with the features of one or more of the appended claims.

The suspension system of the invention has several options of use.

According to the invention the at least one plate comprises an aperture through which the teat of the holder is extendable, when the holder is suspended from the obliquely upwards and forwards extending first protrusions of the at least one plate, and the locking portion comprises an upstanding first guide rail, and a first movable portion which is up-and-down movable along the first guide rail and which first movable portion is equipped with downward pointing first retention hooks that are arranged to be positionable within the holder behind an upper rim of the holder, when said holder is suspended from the obliquely upwards and forwards extending first protrusions of the at least one plate and the first movable portion is mounted on the upstanding first guide rail. This is the simplest arrangement of the suspension system of the invention.

Optionally, the locking portion comprises an assembly of the first movable portion and a second movable portion, which assembly comprising the first movable portion is up-and-down movable along the first guide rail, and wherein the second movable portion is mounted on the first guide rail and is equipped with an upstanding second guide rail, wherein the first movable portion is up-and-down movable along the upstanding second guide rail of the second movable portion. In this arrangement it is not only possible to suspend the feed holder in its normal way of use, wherein the teat of the feed holder is accessible for the cattle; it is also possible to suspend the feed holder in a manner that the teat is inaccessible, or to suspend the feed holder upside down. Different features that support these options will be discussed hereinafter.

It is preferable that the second movable portion is equipped with downward pointing second retention hooks that are arranged to be positionable within the holder behind an upper rim of the holder, when said holder is suspended from the obliquely upwards and forwards extending first protrusions of the at least one plate and the second movable portion is mounted on the upstanding first guide rail. This enables to suspend the feed holder in its normal way of use, wherein the teat of the feed holder is accessible for the cattle, for which purpose the at least one plate comprises an aperture through which the teat of the holder is extendable, when the holder is suspended from the obliquely upwards and forwards extending first protrusions of the at least one plate.

Further it is preferable that the second movable portion is equipped with obliquely upwards and forwards extending second protrusions which can protrude through apertures of the holder, wherein the first retention hooks of the first movable portion are then arranged to be positionable behind an upper rim of the holder to secure the holder against lifting from said second protrusions. This enables that when the holder is suspended from the obliquely upwards and forwards extending second protrusions of the second movable portion, the teat will engage the at least one plate so as to prevent that the cattle can suck the teat. This arrangement can also be used to suspend the feed holder upside down.

The invention will hereinafter be further elucidated with reference to the drawing of an exemplary embodiment of a suspension system according to the invention that is not limiting as to the appended claims.

In the drawing:
- figure 1 shows a first embodiment of a suspension system according to the invention without feed holder;
- figure 2 shows the suspension system of figure 1 with a feed holder;
- figure 3 shows a second embodiment of a suspension system according to the invention without feed holder;
- figure 4 shows the suspension system of figure 3 with a feed holder in a normal use position;
- figure 5 shows the suspension system of figure 3 with a feed holder in a position wherein sucking the teat of the feed holder is prevented; and
- figure 6 shows the suspension system of figure 3 with the feed holder in upside down position.

Whenever in the figures the same reference numerals are applied, these numerals refer to the same parts.

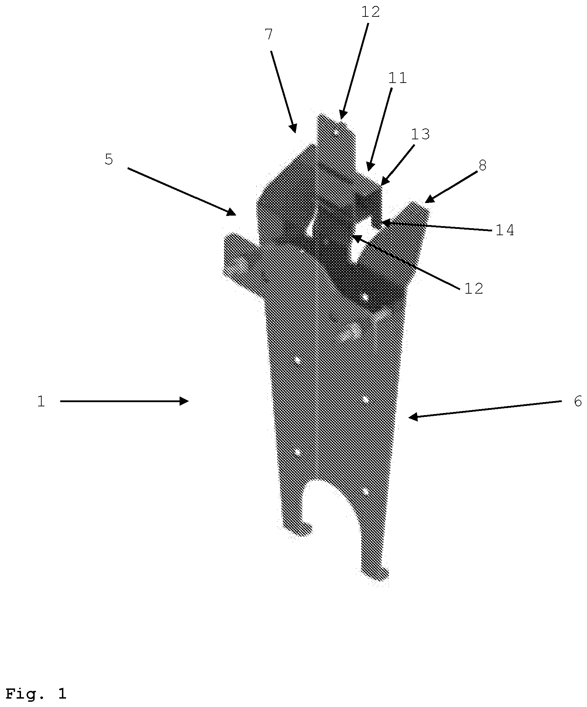

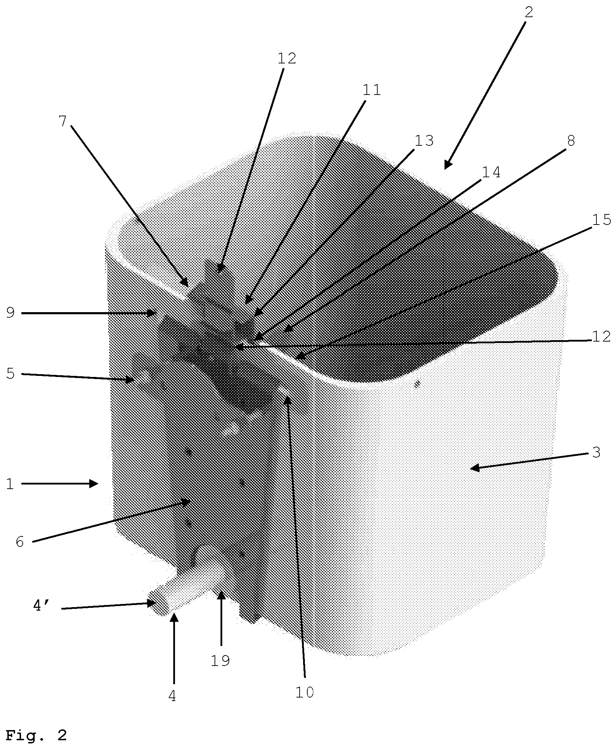

Making first reference to figures 1 and 2, it shows a first embodiment of a suspension system 1 for a feeding system 2 for cattle. Figure 2 shows that said feeding system 2 comprises a holder 3 for liquid feed, which holder 3 is provided with a teat 4 having a suction end 4' to enable cattle to suck liquid feed from the holder 3.

The suspension system 1 comprises an attachment portion 5 which is equipped to connect the suspension system 1 to a fence. Further the suspension system 1 comprises at least one plate 6 which is provided with obliquely upwards and forwards extending first protrusions 7, 8 which are arranged to protrude through apertures 9, 10 in a wall of the holder 3 so that the first protrusions 7, 8 extend to within the holder 3. The suspension system 1 further comprises a locking portion 11 to secure the holder 3 against lifting from said first protrusions 7, 8.

It is further shown that the locking portion 11 comprises an upstanding first guide rail 12. In this first embodiment a first movable portion 13 which is up-and-down movable along the first guide rail 12 is equipped with downward pointing first retention hooks 14 that are arranged to be positionable within the holder 3 behind an upper rim 15 of the holder 3, when said holder 3 is suspended -as shown in figure 2- from the obliquely upwards and forwards extending first protrusions 7, 8 of the at least one plate 6, wherein further the first movable portion 13 is mounted on the upstanding first guide rail 12. This is the simplest arrangement of the suspension system 1 of the invention showing the normal use of the holder 3 suspended from the suspension system 1 according to the first embodiment.

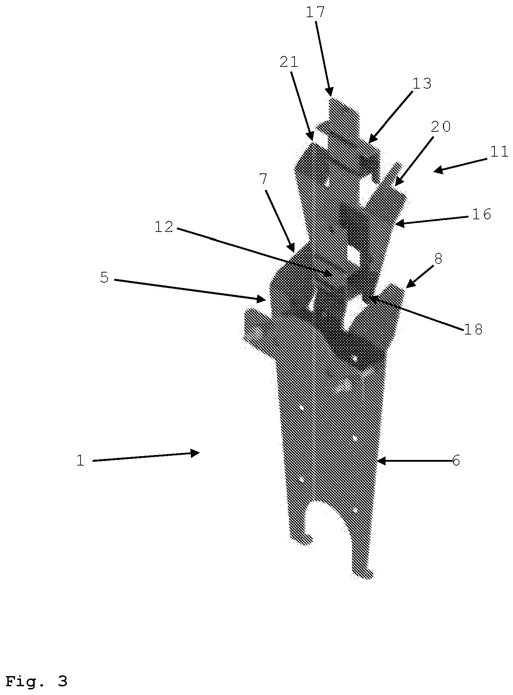

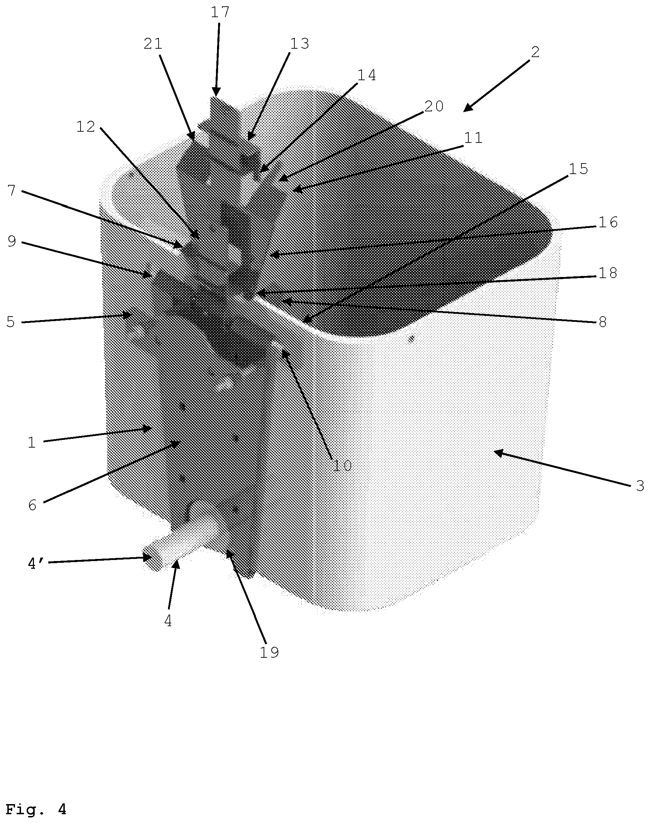

Making now reference to figures 3 and 4, it shows a second embodiment of a suspension system 1 for a feeding system 2 for cattle. Figure 4 shows that said feeding system 2 comprises a holder 3 for liquid feed, which holder 3 is provided with a teat 4 having a suction end 4' to enable cattle to suck liquid feed from the holder 3.

The suspension system 1 of the second embodiment also comprises an attachment portion 5 which is equipped to connect the suspension system 1 to a fence. Further in this embodiment the suspension system 1 comprises at least one plate 6 which is provided with obliquely upwards and forwards extending first protrusions 7, 8 which are arranged to protrude through apertures 9, 10 of the holder 3. The suspension system 1 further comprises a locking portion 11 to secure the holder 3 against lifting from said first protrusions 7, 8.

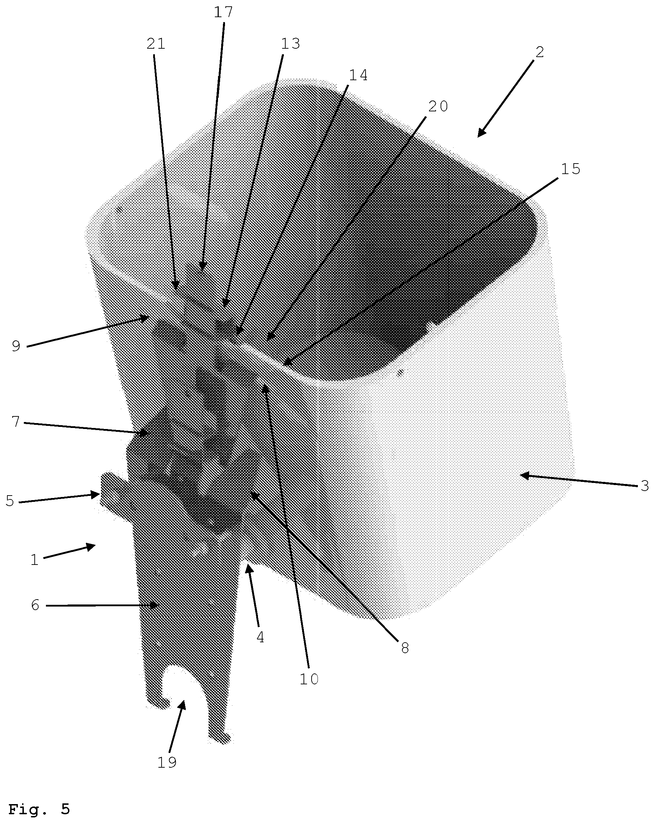

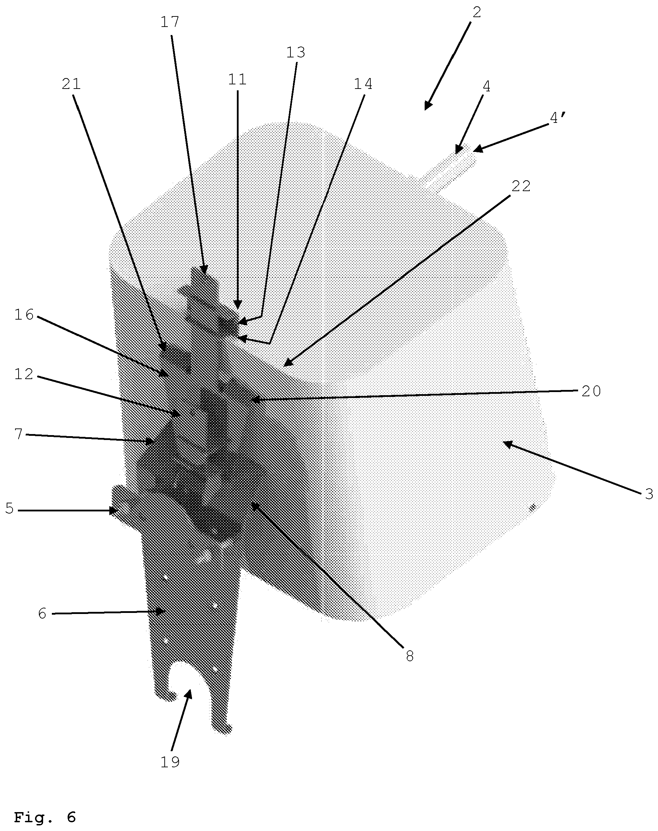

It is further shown that the locking portion 11 comprises an upstanding first guide rail 12. In this second embodiment the locking portion 11 comprises an assembly of the first movable portion 13 and a second movable portion 16, which assembly comprising the first movable portion 13 is up-and-down movable along the first guide rail 12. The second movable portion 16 is mounted on the first guide rail 12 and is equipped with an upstanding second guide rail 17. The first movable portion 13 is up-and-down movable along said up-standing second guide rail 17 of the second movable portion 16. In this arrangement it is not only possible to suspend the feed holder 3 in its normal way of use, wherein the teat 4 of the feed holder 3 is accessible for the cattle as is shown in figure 4; it is also possible to suspend the feed holder 3 in a manner that the teat 4 is inaccessible for cattle as is shown in figure 5, or to suspend the feed holder 3 upside down as is shown in figure 6. Different features that support these options will be discussed hereinafter.

It is preferable that the second movable portion 16 is equipped with downward pointing second retention hooks 18 that are arranged to be positionable within the holder 3 behind an upper rim 15 of the holder 3, when said holder 3 is suspended from the obliquely up-wards and forwards extending first protrusions 7, 8 of the at least one plate 6 and the second movable portion 16 is mounted on the up-standing first guide rail 12. This is shown in figure 4 and enables to suspend the feed holder 3 in its normal way of use, wherein the teat 4 of the feed holder 3 is accessible for the cattle.

In that connection it is desirable that the at least one plate 6 comprises an aperture 19 (shown in both figure 2 and figure 4) through which the teat 4 of the holder 3 is extendable, when the holder 3 is suspended from the obliquely upwards and forwards extending first protrusions 7, 8 of the at least one plate 6.

Further figure 5 shows the preferable arrangement that the second movable portion 16 is equipped with obliquely upwards and forwards extending second protrusions 20, 21 which can protrude through apertures in a wall of the holder 3, wherein the first retention hooks 14 of the first movable portion 13 are then arranged to be positionable within the holder 3 behind an upper rim 15 of the holder 3 to secure the holder 3 against lifting from said second protrusions 20, 21. This enables that when the holder 3 is suspended from the obliquely upwards and forwards extending second protrusions 20, 21 of the second movable portion 16, the teat 4 will engage the at least one plate 6 so as to prevent that the cattle can suck the teat 4 - this is indeed shown in figure 5. The arrangement with the assemble of the first movable portion 13 and the second movable portion 16 can also be used to suspend the feed holder 3 upside down, as is shown in figure 6. In that situation the first retention hooks 14 clamp the feed holder 3 behind a lower rim 22 at the bottom of the feed holder.

Although the invention has been discussed in the foregoing with reference to an exemplary embodiment of the suspension system of the invention, the invention is not restricted to these particular embodiments which can be varied in many ways without departing from the invention. The discussed exemplary embodiments shall therefore not be used to construe the appended claims strictly in accordance therewith. On the contrary the embodiments are merely intended to explain the wording of the appended claims without intent to limit the claims to these exemplary embodiments. The scope of protection of the invention shall therefore be construed in accordance with the appended claims only, wherein a possible ambiguity in the wording of the claims shall be resolved using these exemplary embodiments.

## Claims

1. A suspension system (1) for a feeding system (2) for cattle, said feeding system (2) comprising a holder (3) for liquid feed, which holder (3) is provided with a teat (4) having a suction end (4') to enable the cattle to suck liquid feed from the holder (3), said suspension system (1) comprising an attachment portion (5) which is equipped to connect the suspension system (1) to a fence, and wherein the suspension system (1) comprises at least one plate (6) which is provided with obliquely upwards and forwards extending first protrusions (7, 8) which are arranged to protrude through apertures (9, 10) in a wall of the holder (3) so that the first protrusions (7, 8) extend to within the holder (3), and which suspension system (1) further comprises a locking portion (11) to secure the holder (3) against lifting from said first protrusions (7, 8), **characterized in that** the at least one plate (6) comprises an aperture (19) through which the teat (4) of the holder (3) is extendable, when the holder (3) is suspended from the obliquely upwards and forwards extending first protrusions (7, 8) of the at least one plate (6), and the locking portion (11) comprises an upstanding first guide rail (12), and a first movable portion (13) which is up-and-down movable along the first guide rail (12) and which first movable portion (13) is equipped with one or more downward pointing first retention hooks (14) that are arranged to be positionable within the holder (3) behind an upper rim (15) of the holder (3), when said holder (3) is suspended from the obliquely upwards and forwards extending first protrusions (7, 8) of the at least one plate (6) and the first movable portion (13) is mounted on the upstanding first guide rail (12).

2. The suspension system of claim 1, **characterized in that** the locking portion (11) comprises an assembly of the first movable portion (13) and a second movable portion (16), which assembly comprising the first movable portion (13) is up-and-down movable along the first guide rail (12), and wherein the second movable portion (16) is mounted on the first guide rail (12) and is equipped with an upstanding second guide rail (17), wherein the first movable portion (13) is up-and-down movable along the upstanding second guide rail (17) of the second movable portion (16).

3. The suspension system of claim 2, **characterized in that** the second movable portion (16) is equipped with one or more downward pointing second retention hooks (18) that are arranged to be positionable within the holder (3) behind an upper rim (15) of the holder (3), when said holder (3) is suspended from the obliquely upwards and forwards extending first protrusions (7, 8) of the at least one plate (6) and the second movable portion (16) is mounted on the upstanding first guide rail (12).

4. The suspension system of claim 2 or 3, **characterized in that** the second movable portion (16) is equipped with obliquely upwards and forwards extending second protrusions (20, 21) which can protrude through apertures (9, 10) of the holder (3), wherein the one or more first retention hooks (14) of the first movable portion (13) are then arranged to be positionable within the holder (3) behind an upper rim (15) of the holder (3) to secure the holder (3) against lifting from said second protrusions (20, 21).

5. The suspension system of claim 4, **characterized in that** when the holder (3) is suspended from the obliquely upwards and forwards extending second protrusions (20, 21) of the second movable portion (16), the teat (4) will engage the at least one plate (6) so as to prevent that the cattle can suck the teat (4).

## Patentansprüche

1. Aufhängungssystem (1) für ein Fütterungssystem (2) für Vieh, wobei das Fütterungssystem (2) einen Halter (3) für Flüssigfutter umfasst, wobei der Halter (3) mit einem Sauger (4) versehen ist, der ein Saugende (4') aufweist, damit das Vieh das Flüssigfutter aus dem Halter (3) saugen kann, wobei das Aufhängungssystem (1) einen Befestigungsabschnitt (5) umfasst, der zur Verbindung des Aufhängungssystems (1) mit einem Zaun ausgestattet ist, und wobei das Aufhängungssystem (1) mindestens eine Platte (6) umfasst, die mit schräg nach oben und nach vorne verlaufenden ersten Vorsprüngen (7, 8) versehen ist, die so angeordnet sind, dass sie durch Aussparungen (9, 10) in einer Wand des Halters (3) vorragen, so dass sich die ersten Vorsprünge (7, 8) bis in den Halter (3) erstrecken, und wobei das Aufhängungssystem (1) ferner einen Verriegelungsabschnitt (11) umfasst, um den Halter (3) gegen Abheben von den ersten Vorsprüngen (7, 8) zu sichern, **dadurch gekennzeichnet, dass** die mindestens eine Platte (6) eine Aussparung (19) umfasst, durch die der Sauger (4) des Halters (3) ausziehbar ist, wenn der Halter (3) an den schräg nach oben und vorne verlaufenden ersten Vorsprüngen (7, 8) der mindestens einen Platte (6) aufgehängt ist, und der Verriegelungsabschnitt (11) eine hochstehende erste Führungsschiene (12) und einem ersten beweglichen Abschnitt (13), der entlang der ersten Führungsschiene (12) auf- und abbewegbar ist, umfasst und wobei der erste bewegliche Abschnitt (13) mit einem oder mehreren nach unten weisenden ersten Haltehaken (14) ausgestattet ist, die innerhalb des Halters (3) hinter einem oberen Rand (15) des Halters (3) positionierbar angeordnet sind, wenn der Halter (3) an den schräg nach oben und nach vorne verlaufenden ersten Vorsprüngen (7, 8) der mindestens einen Platte (6) aufgehängt ist und der erste bewegliche Abschnitt (13) an der hochstehenden ersten Führungsschiene (12) befestigt ist.

2. Aufhängungssystem nach Anspruch 1, **dadurch gekennzeichnet, dass** der Verriegelungsabschnitt (11) eine Anordnung aus dem ersten beweglichen Abschnitt (13) und einem zweiten beweglichen Abschnitt (16) umfasst, wobei die Anordnung, die den ersten beweglichen Abschnitt (13) umfasst, entlang der ersten Führungsschiene (12) auf- und abbewegbar ist, und wobei der zweite bewegliche Abschnitt (16) an der ersten Führungsschiene (12) befestigt ist und mit einer hochstehenden zweiten Führungsschiene (17) ausgestattet ist, wobei der erste bewegliche Abschnitt (13) entlang der hochstehenden zweiten Führungsschiene (17) des zweiten beweglichen Abschnitts (16) auf- und abbewegbar ist.

3. Aufhängungssystem nach Anspruch 2, **dadurch gekennzeichnet, dass** der zweite bewegliche Abschnitt (16) mit einem oder mehreren nach unten weisenden zweiten Haltehaken (18) ausgestattet ist, die so angeordnet sind, dass sie innerhalb des Halters (3) hinter einem oberen Rand (15) des Halters (3) positionierbar sind, wenn der Halter (3) an den schräg nach oben und nach vorne verlaufenden ersten Vorsprüngen (7, 8) der mindestens einen Platte (6) aufgehängt ist und der zweite bewegliche Abschnitt (16) an der hochstehenden ersten Führungsschiene (12) befestigt ist.

4. Aufhängungssystem nach Anspruch 2 oder 3, **dadurch gekennzeichnet, dass** der zweite bewegliche Abschnitt (16) mit schräg nach oben und nach vorne verlaufenden zweiten Vorsprüngen (20, 21) ausgestattet ist, die durch Aussparungen (9, 10) des Halters (3) vorragen können, wobei der eine oder die mehreren ersten Haltehaken (14) des ersten beweglichen Abschnitts (13) dann innerhalb des Halters (3) hinter einem oberen Rand (15) des Halters (3) positionierbar angeordnet sind, um den Halter (3) gegen Abheben von den zweiten Vorsprüngen (20, 21) zu sichern.

5. Aufhängungssystem nach Anspruch 4, **dadurch gekennzeichnet, dass**, wenn der Halter (3) an den schräg nach oben und nach vorne verlaufenden zweiten Vorsprüngen (20, 21) des zweiten beweglichen Abschnitts (16) aufgehängt ist, der Sauger (4) so mit der mindestens einen Platte (6) in Eingriff steht, das verhindert wird, dass das Vieh an dem Sauger (4) saugen kann.

## Revendications

1. Système de suspension (1) pour un système de nourrissage (2) pour bétail, ledit système de nourrissage (2) comprenant un support (3) pour alimentation liquide, lequel support (3) est pourvu d'une tétine (4) ayant une extrémité d'aspiration (4') pour permettre au bétail d'aspirer l'alimentation liquide du support (3), ledit système de suspension (1) comprenant une partie de fixation (5) qui est équipée pour relier le système de suspension (1) à une clôture, et dans lequel le système de suspension (1) comprend au moins une plaque (6) pourvue de premières saillies (7, 8) s'étendant obliquement vers le haut et vers l'avant qui sont agencées pour faire saillie au travers d'ouvertures (9, 10) d'une paroi du support (3) de telle sorte que les premières saillies (7, 8) s'étendent jusqu'à l'intérieur du support (3), et lequel système de suspension (1) comprend en outre une partie de verrouillage (11) pour empêcher le support (3) de se soulever par rapport auxdites premières saillies (7, 8), **caractérisé en ce que** la ou les plaques (6) comprennent une ouverture (19) par laquelle la tétine (4) du support (3) peut s'étendre, lorsque le support (3) est suspendu aux premières saillies (7, 8) s'étendant obliquement vers le haut et vers l'avant de la ou des plaques (6), et la partie de verrouillage (11) comprend un premier rail de guidage vertical (12), et une première partie mobile (13) qui est mobile vers le haut et vers le bas le long du premier rail de guidage (12) et laquelle première partie mobile (13) est équipée d'un ou plusieurs premiers crochets de retenue (14) dirigés vers le bas, qui sont agencés pour pouvoir être positionnés dans le support (3) derrière un rebord supérieur (15) du support (3), lorsque ledit support (3) est suspendu aux premières saillies (7, 8) s'étendant obliquement vers le haut et vers l'avant de la ou des plaques (6) et la première partie mobile (13) est montée sur le premier rail de guidage vertical (12).

2. Système de suspension selon la revendication 1, **caractérisé en ce que** la partie de verrouillage (11) comprend un assemblage de la première partie mobile (13) et d'une seconde partie mobile (16), lequel assemblage comprenant la première partie mobile (13) est mobile vers le haut et vers le bas le long du premier rail de guidage (12), et dans lequel la seconde partie mobile (16) est montée sur le premier rail de guidage (12) et est équipée d'un second rail de guidage vertical (17), dans lequel la première partie mobile (13) est mobile vers le haut et vers le bas le long du second rail de guidage vertical (17) de la seconde partie mobile (16).

3. Système de suspension selon la revendication 2, **caractérisé en ce que** la seconde partie mobile (16) est équipée d'un ou plusieurs seconds crochets de retenue (18) dirigés vers le bas qui sont agencés pour pouvoir être positionnés à l'intérieur du support (3) derrière un rebord supérieur (15) du support (3), lorsque ledit support (3) est suspendu aux premières saillies (7, 8) s'étendant obliquement vers le haut et vers l'avant de la ou des plaques (6) et la seconde partie mobile (16) est montée sur le premier rail de guidage vertical (12).

4. Système de suspension selon la revendication 2 ou 3, **caractérisé en ce que** la seconde partie mobile (16) est équipée de secondes saillies (20, 21) s'étendant obliquement vers le haut et vers l'avant qui peuvent faire saillie à travers des ouvertures (9, 10) du support (3), dans lequel le ou les premiers crochets de retenue (14) de la première partie mobile (13) sont alors agencés pour pouvoir être positionnés à l'intérieur du support (3) derrière un rebord supérieur (15) du support (3) afin d'empêcher le support (3) de se soulever par rapport auxdites secondes saillies (20, 21).

5. Système de suspension selon la revendication 4, **caractérisé en ce que** lorsque le support (3) est suspendu à partir des secondes saillies (20, 21) s'étendant obliquement vers le haut et vers l'avant de la seconde partie mobile (16), la tétine (4) vient en prise avec la ou les plaques (6) de manière à empêcher le bétail d'aspirer la tétine (4).
